# EUROPEAN PATENT APPLICATION

(11) **EP 4 831 024 A1**
(43) Date of publication of application: **28.10.2026**
(21) Application number: 25849973.0
(22) Date of filing: 01.04.2025
(51) Int. Cl.: B60W 30/06

(54) **VEHICLE SPEED CONTROL METHOD AND APPARATUS, DEVICE, STORAGE MEDIUM, AND PROGRAM PRODUCT**

(30) Priority: 05.08.2024 CN 202411065488
(71) Applicant: Chery Automobile Co., Ltd., Wuhu, Anhui 241006 (CN)
(72) Inventor: MA, Huanghuang, Wuhu, Anhui 241006 (CN); ZHOU, Chongguang, Wuhu, Anhui 241006 (CN); LI, Bocheng, Wuhu, Anhui 241006 (CN); ZHANG, Yue, Wuhu, Anhui 241006 (CN); XU, Wei, Wuhu, Anhui 241006 (CN); LI, Zeyu, Wuhu, Anhui 241006 (CN); MAO, Xinhao, Wuhu, Anhui 241006 (CN); WANG, Lv, Wuhu, Anhui 241006 (CN)
(74) Representative: Adamson Jones
(86) International application number: PCT/CN2025/086646
(87) International publication number: WO 2026/031603

(57) **Abstract**

A vehicle speed control method, comprising: when an automatic parking system is operating, an automatic transmission control unit (100a) of a vehicle (100) entering an automatic parking operating condition in response to a torque output from an engine of the vehicle (100); under the automatic parking operating condition, the automatic transmission control unit (100a) acquiring a vehicle speed control signal of the vehicle (100), the vehicle speed control signal comprising a braking force signal or a throttle signal, the braking force signal being issued by an electronic stability system of the vehicle (100) under control of the automatic parking system, and the throttle signal being issued by an engine management system (100b) of the vehicle (100) under control of the automatic parking system; and the automatic transmission control unit (100a) controlling a clutch (100a1) of an automatic transmission of the vehicle (100) on the basis of the vehicle speed control signal, so that the vehicle speed of the vehicle (100) is maintained at a target vehicle speed corresponding to the automatic parking operating condition. A vehicle speed control apparatus, used for implementing the vehicle speed control method. A computer device, used for performing the vehicle speed control method. A computer-readable storage medium, used for implementing the vehicle speed control method. A computer program product, used for implementing the vehicle speed control method. Such a configuration ensures the accuracy of vehicle speed control and improves vehicle speed control performance.

## Description

The present disclosure claims priority to Chinese Patent Application No. 202411065488.6, filed August 5, 2024, and entitled "METHOD AND APPARATUS FOR CONTROLLING VEHICLE SPEED, DEVICE, STORAGE MEDIUM, AND PROGRAM PRODUCT", the entire contents of which are incorporated herein by reference.

### TECHNICAL FIELD

The present disclosure relates to the field of automobiles, and particularly to a method and an apparatus for controlling a vehicle speed, a device, a storage medium, and a program product.

### BACKGROUND

With the rapid development of the automotive industry, advanced driver assistance systems (ADAS) are applied in modern vehicles. These systems, through various onboard devices and algorithms, can provide effective advice to drivers and enable auxiliary functions, particularly in speed control.

In related art, automatic parking is a common function of advanced driver assistance systems. For example, under the condition where the automatic parking system function is activated, the vehicle can achieve the functions of parking in place and cruising for a parking space.

However, when the automatic parking system controls the vehicle to park in place or cruise for a parking space, the effectiveness of speed control is relatively poor.

### SUMMARY

The embodiments of the present disclosure provide a method and an apparatus for controlling a vehicle speed, a device, a storage medium, and a program product, which can improve the control effect of an automatic parking system on vehicle speed. The technical solutions are as follows.

In an aspect, a method for controlling vehicle speed is provided, which is implemented by a vehicle equipped with an automatic parking system. The method includes:
in a case where the automatic parking system is in operation, entering, by an automatic transmission control unit of the vehicle, an automatic parking condition in response to a torque output of an engine of the vehicle;
under the automatic parking condition, acquiring, by the automatic transmission control unit, a vehicle speed control signal, wherein the vehicle speed control signal includes a braking force signal or an accelerator signal, the braking force signal being sent by an electronic stability system of the vehicle controlled by the automatic parking system, and the accelerator signal being sent by an engine management system of the vehicle controlled by the automatic parking system; and
controlling, by the automatic transmission control unit, a clutch of an automatic transmission of the vehicle based on the vehicle speed control signal, such that the vehicle speed is maintained at a target vehicle speed corresponding to the automatic parking condition.

In another aspect, an apparatus for controlling a vehicle speed is provided. The apparatus includes:
an automatic parking condition entry module, configured to enter an automatic parking condition in response to a torque output of an engine of the vehicle in a case where an automatic parking system is in operation;
a vehicle speed control signal acquisition module, configured to acquire a vehicle speed control signal of the vehicle under the automatic parking condition, wherein the vehicle speed control signal includes a braking force signal or an accelerator signal, the braking force signal being sent by an electronic stability system of the vehicle controlled by the automatic parking system, and the accelerator signal being sent by an engine management system of the vehicle controlled by the automatic parking system; and
a clutch control module, configured to control a clutch of an automatic transmission of the vehicle based on the vehicle speed control signal, such that the vehicle speed is maintained at a target vehicle speed corresponding to the automatic parking condition.

In some embodiments, the automatic parking condition includes a creeping condition and a starting condition;
the clutch control module is configured to: maintain the creeping condition in a case where the vehicle speed control signal includes the braking force signal; under the creeping condition, control the clutch of the automatic transmission of the vehicle based on the braking force signal, such that the vehicle speed is maintained at the first target vehicle speed corresponding to the creeping condition; when the vehicle speed control signal includes the accelerator signal, the starting condition is maintained; and under the starting condition, control the clutch of the automatic transmission of the vehicle based on the accelerator signal, such that the vehicle speed is maintained at the second target vehicle speed corresponding to the starting condition; wherein the first target vehicle speed is lower than the second target vehicle speed.

In some embodiments, under the creeping condition, an engagement depth of the clutch is controlled based on the braking force signal and a gradient of a road on which the vehicle is located, such that the vehicle speed is maintained at the first target vehicle speed.

In some embodiments, under the creeping condition, the braking force corresponding to the braking force signal is mapped to a master cylinder pressure of a brake master cylinder, and based on the master cylinder pressure and the gradient of the road on which the vehicle is located, the engagement depth of the clutch is controlled to maintain the vehicle speed at the first target vehicle speed.

In some embodiments, under the starting condition, the engagement depth of the clutch is controlled based on the accelerator signal and the gradient of the road on which the vehicle is located, such that the vehicle speed is maintained at the second target vehicle speed.

In some embodiments, the first target vehicle speed ranges from 1 to 3 kilometers per hour; and the second target vehicle speed ranges from 7 to 9 kilometers per hour.

In another aspect, a computer device is provided. The computer device includes a processor and a memory. The memory stores at least one instruction, at least one program, a code set, or an instruction set. The at least one instruction, the at least one program, the code set, or the instruction set, when loaded and executed by the processor, causes the processor to perform the method for controlling the vehicle speed as described above.

In another aspect, a computer-readable storage medium is provided. The storage medium stores at least one instruction, at least one program, code set, or instruction set. The at least one instruction, the at least one program, the code set, or the instruction set, when loaded and executed by a processor, causes the processor to perform the method for controlling the vehicle speed as described above.

In another aspect, a computer program product is provided. The program product includes a computer program stored in a computer-readable storage medium. A processor of a computer device, when reading and executing the computer program from the computer-readable storage medium, causes the computer device to perform the method for controlling the vehicle speed according to any of the above alternative implementations.

The technical solutions according to the present disclosure at least achieve the following beneficial effects.

When the automatic parking system is in operation, the automatic transmission control unit of the vehicle enters the automatic parking condition and operates at the speed corresponding to this condition. During this process, the automatic transmission control unit of the vehicle can receive the vehicle speed control signal and, based on this signal, controls the clutch of the automatic transmission to maintain the vehicle speed at the target vehicle speed corresponding to the automatic parking condition, ensuring accurate speed control in the automatic parking scenario.

It should be understood that the general description above and the detailed descriptions that follow are merely exemplary and explanatory, and do not limit the present disclosure.

### BRIEF DESCRIPTION OF DRAWINGS

The accompanying drawings are incorporated into and constitute a part of the specification, illustrate embodiments consistent with the present disclosure, and together with the specification serve to explain the principles of the present disclosure.
FIG. 1 is a system diagram of a method for controlling a vehicle speed according to some embodiments of the present disclosure;
FIG. 2 is a flowchart of a method for controlling a vehicle speed according to some embodiments of the present disclosure;
FIG. 3 is a flowchart of a method for controlling a vehicle speed according to some embodiments of the present disclosure;
FIG. 4 is a schematic diagram of a comparison table of clutch transmission torque coefficients according to some embodiments of the present disclosure;
FIG. 5 is a schematic diagram of a comparison table of brake pressure and four-wheel braking force according to some embodiments of the present disclosure;
FIG. 6 is a flowchart of the overall signal communication supported by the automatic transmission control unit for the ADAS system according to some embodiments of the present disclosure;
FIG. 7 is a control framework diagram of the automatic transmission control unit according to some embodiments of the present disclosure under the APA function;
FIG. 8 is a schematic diagram of the function of the automatic transmission control unit according to some embodiments of the present disclosure to achieve vehicle speed control under APA function;
FIG. 9 is a schematic diagram of the automatic transmission control unit supporting ADAS system signal communication according to some embodiments of the present disclosure;
FIG. 10 is a block diagram of a vehicle speed control device according to some embodiments of the present disclosure; and
FIG. 11 is a schematic structural diagram of a computer device according to some embodiments of the present disclosure.

### DETAILED DESCRIPTION

The exemplary embodiments are described in detail herein, and examples are illustrated in the accompanying drawings. When the following description refers to the accompanying drawings, the same numbers in different accompanying drawings represent the same or similar elements unless otherwise indicated. The embodiments described in the following exemplary embodiments do not represent all embodiments consistent with the present disclosure. Rather, they are merely examples of apparatus and methods consistent with certain aspects of the present disclosure, as detailed in the appended claims.

The present disclosure proposes a vehicle speed control scheme that can maintain the vehicle speed at the target vehicle speed corresponding to the automatic parking condition, ensuring the accuracy of vehicle speed control and improving the control efficiency of vehicle speed.

To facilitate understanding, the following explains some concepts related to the present disclosure.
1) The advanced driver assistance system (ADAS) is a vehicle safety technology designed to enhance safety and comfort during driving by utilizing sensors, radars, cameras, and other devices. The ADAS system provides various functions, including automatic emergency braking, lane-keeping assist, automatic parking, blind-spot monitoring, traffic sign recognition, and adaptive cruise control. These functions work by continuously monitoring the vehicle's surroundings in real-time, identifying potential hazards, and taking necessary measures to minimize the occurrence of accidents or mitigate their impact.
2) The transmission control unit (TCU) is a component of the electronic control system of the vehicle, configured to manage and control the operation of the automatic transmission. By monitoring parameters such as vehicle speed, RPM, acceleration, and engine load, the TCU determines when to shift gears, ensuring a smooth driving experience and high fuel efficiency.
3) The auto parking assist (APA) is an advanced driving assistance technology designed to help drivers easily complete parking maneuvers. The APA system detects and measures the space in the surrounding environment by using sensors (such as ultrasonic sensors or cameras) installed on the vehicle. Once the driver selects the automatic parking function, the APA system takes over the steering operation of the vehicle and controls the acceleration and braking of the vehicle to achieve safe and precise parking.
4) The engine management system (EMS) is a vehicle electronic control system configured to manage and optimize engine operation. EMS monitors and adjusts parameters such as fuel supply, air flow, ignition timing, and emission control to ensure that the engine achieves optimal efficiency, power output, and low emission levels under different operating conditions.
5) The electronic stability program (ESP) is a vehicle dynamic control system designed to assist drivers in maintaining vehicle stability and control during emergency situations. ESP monitors parameters such as steering angle, lateral acceleration, and wheel speed through sensors. Once a potential sideslip or loss of control situation is detected, the ESP adjusts the braking force distribution of the vehicle through the automatic braking system and reduces engine power when necessary to stabilize the vehicle's travel direction.
6) The electric power steering (EPS) is a system that utilizes an electric power assist mechanism to assist the driver in steering. The EPS system replaces the hydraulic pump in traditional hydraulic systems with electronic devices such as electric motors or electric pumps, and detects the driver's steering force and direction through sensors.
7) The creeping condition refers to a specific driving condition where the vehicle travels at low speeds. For example, the vehicle moves at an extremely low speed, such as in heavy traffic or when precise parking is required. In this condition, the driver only needs to lightly step on the brake or accelerator, and the vehicle can move slowly. Under this condition, the vehicle can maintain automatic movement or automatic stopping without requiring the driver to frequently step on the brake or accelerate.
8) The starting condition refers to the driving condition when the vehicle is being started or starts moving from a stationary state, and typically refers to the process of accelerating and driving the vehicle from a stopped state. The condition in this stage includes starting the engine, engaging the appropriate gear (such as automatic or manual), releasing the brake, and applying sufficient accelerator to make the vehicle start moving.
9) The torque output refers to the magnitude of torque transmitted from the engine or powertrain to the vehicle's drive wheels. Typically, the power generated by the engine or electric motor is transmitted to the vehicle's drive wheels upon passing through the transmission system (such as the gearbox, drive shaft, or the like).

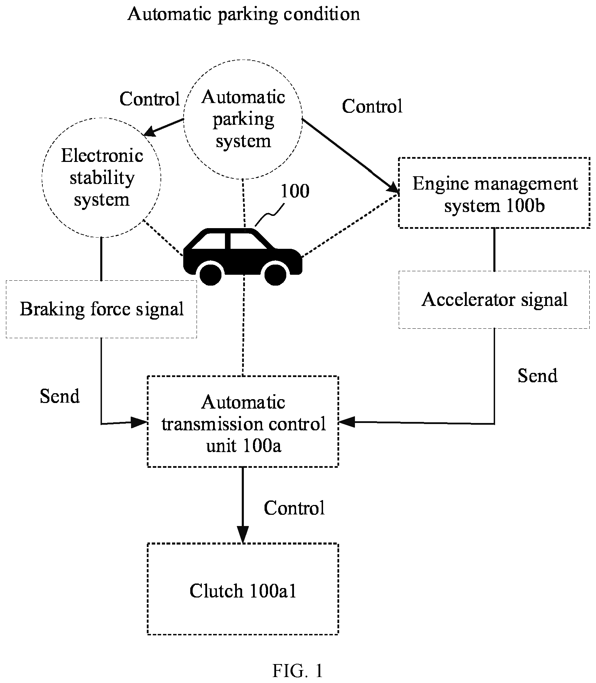

FIG. 1 is a system diagram of a method for controlling a vehicle speed according to some embodiments of the present disclosure. As shown in FIG. 1, the system includes a vehicle 100 supporting an automatic parking system and an electronic stability system. The interior of the vehicle 100 includes an automatic transmission control unit 100a and an engine management system 100b. The transmission of the vehicle also includes a clutch 100a1.

In the case where the vehicle 100 is in an automatic parking condition, the automatic transmission control unit 100a of the vehicle 100 responds to the torque output of the engine of the vehicle 100 and enters the automatic parking condition under the operation of the automatic parking system. In the automatic parking condition, the automatic transmission control unit 100a the braking force signal sent by the electronic stability system of the vehicle 100 or the accelerator signal sent by the engine management system 100b of the vehicle 100, both of which are vehicle speed control signal. The automatic transmission control unit 100a controls the clutch 100a1 of the vehicle 100 based on the vehicle speed control signal, such that the vehicle speed of the vehicle 100 is maintained at the target vehicle speed corresponding to the automatic parking condition.

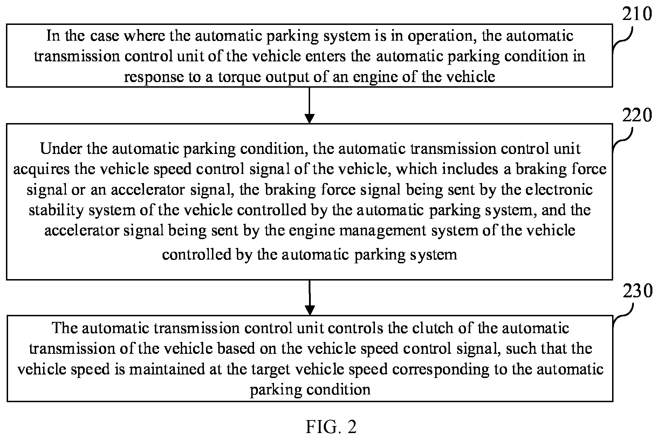

FIG. 2 is a flowchart of a method for controlling a vehicle speed according to some embodiments of the present disclosure. The method for controlling a vehicle speed can be implemented by a vehicle equipped with an automatic parking system, for example, the vehicle can be the vehicle 100 shown in FIG. 1 above. The method for controlling a vehicle speed includes the following processes.

In process 210, in the case where the automatic parking system is in operation, the automatic transmission control unit of the vehicle enters the automatic parking condition in response to a torque output of an engine of the vehicle.

The above automatic parking system is a driving assistance system equipped with automatic parking assistance function.

In the embodiments of the present disclosure, the above automatic parking system can be activated by the driver during the driving process or automatically after the vehicle is started. The automatic parking system is connected to sensors (such as cameras, radar), electronic stability systems, electric power steering systems, and braking systems on the vehicle. When the driver gives instructions to the automatic parking system, the system responds to the driver's instructions and, in conjunction with data uploaded from other software and hardware on the vehicle, controls the vehicle to enter a working state, i.e., an automatic parking state.

In the embodiments of the present disclosure, in the case where the automatic parking system is in operation, the automatic parking system acquires the current vehicle status data (such as vehicle speed data) and parking target data (such as target parking space distance data) via the sensors of the vehicle. Based on the above data, a torque request is calculated and sent to the engine of the vehicle. The engine then outputs torque based on the torque request. In response to this torque output, the automatic transmission control unit of the vehicle enters the automatic parking condition.

The above automatic parking condition refers to the operating condition of the automatic transmission control unit when the vehicle is operating at a predetermined speed under the control of the automatic parking system.

In process 220, under the automatic parking condition, the automatic transmission control unit acquires the vehicle speed control signal of the vehicle, which includes a braking force signal or an accelerator signal, the braking force signal being sent by the electronic stability system of the vehicle controlled by the automatic parking system, and the accelerator signal being sent by the engine management system of the vehicle controlled by the automatic parking system.

In the embodiments of the present disclosure, in the case where the vehicle is in an automatic parking condition, the electronic stability system in the vehicle sends a braking force signal to the automatic transmission control unit at the moment when deceleration is required, based on the target parking information and the current driving state of the vehicle.

In the embodiments of the present disclosure, in the case where the vehicle is in an automatic parking condition, the engine management system can receive a torque request sent by the electronic stability system, and upon executing the torque output, the engine management system sends an accelerator signal.

The above braking force signal can be an electronic signal indicating the amount of braking force applied by the braking system of the vehicle. This signal can be a numerical value indicating the pressure level of the braking force or the percentage of the braking force.

For example, when the current driving speed of the vehicle is about to exceed the predetermined speed in the automatic parking condition, the vehicle needs to slow down. The automatic parking system can control the electronic stability system to send a braking force signal until the driving speed of the vehicle stabilizes within the safe speed range predetermined in the automatic parking condition.

The above accelerator signal is a signal used to control the rotational speed of the engine of the vehicle, and can be utilized to adjust the forward speed or reverse speed of the vehicle. The accelerator signal can be an electronic signal that instructs the engine management system to increase or decrease the accelerator opening, thereby adjusting the vehicle speed.

For example, when the vehicle needs to move forward to enter a parking space and the driving speed is relatively low, the automatic parking system can control the engine management system of the vehicle to send an appropriate accelerator signal, allowing the vehicle to move at a faster speed.

In process 230, the automatic transmission control unit controls the clutch of the automatic transmission of the vehicle based on the vehicle speed control signal, such that the vehicle speed is maintained at the target vehicle speed corresponding to the automatic parking condition.

In the embodiments of the present disclosure, when the automatic transmission control unit receives a vehicle speed control signal, the automatic transmission control unit can control the engagement degree of the clutch based on the content indicated by the vehicle speed control signal. The engagement degree of the clutch can control the vehicle speed. In the case where the engine torque is unchanged, the deeper the engagement degree of the clutch, the faster the engagement rate, the higher the transmission efficiency of the clutch, and the higher the vehicle speed. Conversely, the shallower the engagement degree of the clutch, the faster the disengagement rate, the lower the transmission efficiency of the clutch, and the lower the vehicle speed.

Optionally, in the case where the accelerator signal indicates a high engine speed of the vehicle, the automatic transmission control unit determines that the vehicle speed needs to be increased to the target vehicle speed. The automatic transmission control unit can control the engagement degree of the clutch of the automatic transmission of the vehicle based on the accelerator signal, deepening the engagement to enable the output torque of the engine to be transmitted to the wheels more efficiently, thereby increasing the vehicle speed and maintaining the vehicle speed at the target vehicle speed corresponding to the automatic parking condition. Conversely, in the case where the accelerator signal indicates a low engine speed of the vehicle, the automatic transmission control unit determines that the vehicle speed needs to be decreased to the target vehicle speed. The automatic transmission control unit can control the engagement degree of the clutch of the automatic transmission of the vehicle based on the accelerator signal, shallowing the engagement to enable the output torque of the engine to be transmitted to the wheels less efficiently or not transmitted to the wheels, thereby decreasing the vehicle speed and maintaining the vehicle speed at the target vehicle speed corresponding to the automatic parking condition.

Optionally, in the case where the braking force signal indicates that the braking system of the vehicle applies a braking force greater than the predetermined braking force, the automatic transmission control unit determines that the vehicle speed needs to be reduced to the target vehicle speed. The automatic transmission control unit can control the engagement degree of the clutch of the automatic transmission of the vehicle to be shallower based on the braking force signal, allowing the output torque of the engine to be transmitted to the wheels less efficiently or not transmitted to the wheels, thereby reducing the vehicle speed to maintain the target vehicle speed corresponding to the automatic parking condition. Conversely, in the case where the braking force signal indicates that the braking system of the vehicle applies a braking force less than the predetermined braking force, the automatic transmission control unit determines that the vehicle speed needs to be increased to the target vehicle speed. The automatic transmission control unit can control the engagement degree of the clutch of the automatic transmission of the vehicle to be deeper based on the braking force signal, allowing the output torque of the engine to be transmitted to the wheels more efficiently, thereby reducing the vehicle speed to maintain the target vehicle speed corresponding to the automatic parking condition.

In the embodiments of the present disclosure, in the case where the automatic parking system is in operation, the automatic transmission control unit of the vehicle is in an automatic parking condition and travels at a speed corresponding to this condition. During this process, the automatic transmission control unit of the vehicle can receive a vehicle speed control signal and, based on this signal, control the clutch of the automatic transmission, such that the vehicle speed is maintained at the target vehicle speed corresponding to the automatic parking condition, ensuring the accuracy of vehicle speed control in automatic parking scenarios.

In conjunction with the schemes shown in any one or more embodiments of the present disclosure, in some embodiments, the automatic parking condition includes a creeping condition and a starting condition.

In the embodiments of the present disclosure, under the automatic parking condition, there is a corresponding driving speed for different types of automatic parking scenarios. For example, in the case where the vehicle is in the phase of cruising for a parking space in the automatic parking condition, the automatic transmission control unit is in the starting condition, during which the vehicle requires a higher driving speed to quickly find a suitable parking space, that is, a higher target vehicle speed is needed in the starting condition. For example, in the case where the vehicle is in the parking phase of entering a parking space in the automatic parking condition, the automatic transmission control unit is in the creeping condition, during which the vehicle requires a lower driving speed to ensure safe and controllable parking, that is, a lower target vehicle speed is needed in the creeping condition. Whether in the starting condition or the creeping condition, in the case where the vehicle cannot maintain the target vehicle speed well under the corresponding condition, a poor user experience occurs, such as large speed fluctuations and body shaking.

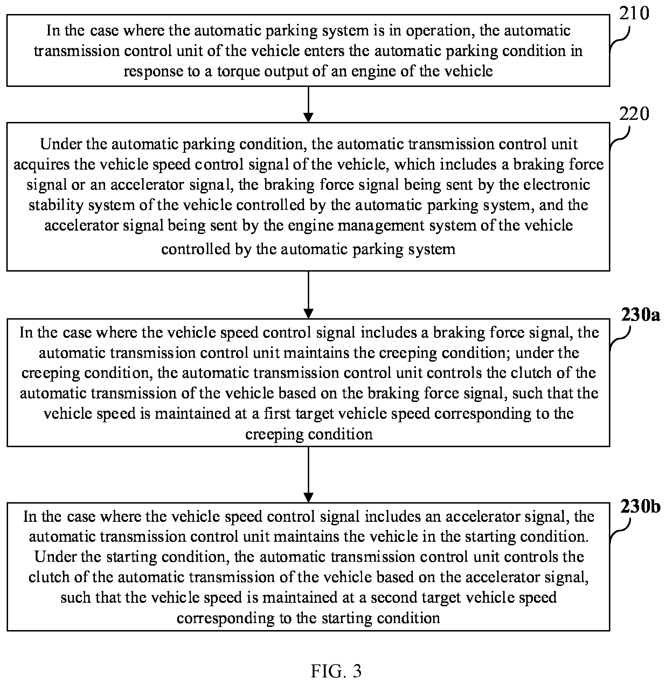

Based on FIG. 2, FIG. 3 is a flowchart of a method for controlling a vehicle speed according to some embodiments of the present disclosure. The process 230 in FIG. 2 can be implemented as the following processes 230a and 230b.

In process 230a, in the case where the vehicle speed control signal includes a braking force signal, the automatic transmission control unit maintains the creeping condition; under the creeping condition, the automatic transmission control unit controls the clutch of the automatic transmission of the vehicle based on the braking force signal, such that the vehicle speed is maintained at a first target vehicle speed corresponding to the creeping condition.

In some embodiments of the present disclosure, upon receiving a braking force signal, the automatic transmission control unit controls the engagement degree of the clutch based on the magnitude of the braking force indicated by the braking force signal, ensuring that the driving speed of the vehicle is maintained at a first target vehicle speed, wherein the first target vehicle speed refers to a predetermined speed or a predetermined speed range.

Optionally, in the case where the vehicle speed control signal includes the braking force signal, it indicates that the automatic parking system needs to maintain the vehicle at a lower speed. For example, when the vehicle is in the phase of parking in a space, the automatic transmission control unit maintains a creeping condition. Under the creeping condition, the automatic transmission control unit controls the engagement degree of the clutch of the automatic transmission of the vehicle based on the braking force signal, ensuring that the vehicle speed remains at the first target vehicle speed corresponding to the creeping condition. For example, in the case where the vehicle speed is lower than the first target vehicle speed in the creeping condition, an increase in speed is required. In this way, the engagement degree of the clutch of the automatic transmission is increased to enhance transmission efficiency. In another example, in the case where the vehicle speed is higher than the first target vehicle speed in the creeping condition, a decrease in speed is necessary. In this case, the engagement degree of the clutch of the automatic transmission can be reduced to decrease transmission efficiency.

In process 230b, in the case where the vehicle speed control signal includes an accelerator signal, the automatic transmission control unit maintains the vehicle in the starting condition. Under the starting condition, the automatic transmission control unit controls the clutch of the automatic transmission of the vehicle based on the accelerator signal, such that the vehicle speed is maintained at a second target vehicle speed corresponding to the starting condition.

In embodiments of the present disclosure, upon receiving an accelerator signal, the automatic transmission control unit controls the engagement degree of the clutch according to the accelerator opening indicated by the accelerator signal, ensuring that the driving speed of the vehicle is maintained at a second target vehicle speed, wherein the second target vehicle speed can refer to a predetermined speed or a predetermined speed range.

Optionally, in the case where the vehicle speed control signal includes the accelerator signal, it indicates that the automatic parking system needs to maintain the vehicle at a higher speed. For example, the vehicle may be in the phase of cruising for a parking space. In this case, the automatic transmission control unit remains in the starting condition. Under the starting condition, the automatic transmission control unit controls the engagement degree of the clutch of the automatic transmission of the vehicle based on the accelerator signal, such that the vehicle speed is maintained at the second target vehicle speed corresponding to the starting condition. For example, in the case where the vehicle speed is lower than the second target vehicle speed in the starting condition, it is necessary to increase the speed. In this way, the engagement degree of the clutch of the automatic transmission can be increased to improve transmission efficiency. Another example is when the vehicle speed is higher than the second target vehicle speed in the starting condition, it is necessary to reduce the speed. In this way, the engagement degree of the clutch of the automatic transmission is reduced to decrease transmission efficiency.

In the embodiments of the present disclosure, the automatic transmission control unit of the vehicle receives the braking force signal and the accelerator signal during the creeping condition or the starting condition. The automatic transmission control unit controls the vehicle speed by combining the vehicle speed control signal and the clutch of the automatic transmission of the vehicle, maintaining the vehicle speed at the corresponding first target vehicle speed or second target vehicle speed during the creeping or starting condition, ensuring the accuracy of vehicle speed control and improving the efficiency of vehicle speed control.

In conjunction with the schemes shown in any one or more embodiments of the present disclosure, in some embodiments, the first target vehicle speed ranges from 1 to 3 kilometers per hour, and the second target vehicle speed ranges from 7 to 9 kilometers per hour.

Optionally, the first target vehicle speed is a predetermined speed within the range of 1 km/h to 3 km/h.

Optionally, the second target vehicle speed is a predetermined speed within the range of 7 km/h to 9 km/h.

It should be noted that in the embodiments of the present disclosure, the above first target vehicle speed and second target vehicle speed are not limited to the predetermined numerical values. Provided that the first target vehicle speed is less than the second target vehicle speed, the above first and second target vehicle speeds can be any other arbitrary vehicle speeds.

In the above embodiment, the first target vehicle speed is lower than the second target vehicle speed. The driving speed of the vehicle under the creeping condition is lower than its driving speed under the starting condition. Driving at a lower speed under the creeping condition ensures safe driving when parking in a space. Driving at a second target vehicle speed, which is higher than the first target vehicle speed under the creeping condition, under the starting condition can improve the efficiency of cruising for a parking space.

In conjunction with the schemes shown in any one or more embodiments of the present disclosure, in some embodiments, the process 230a can be implemented as follows. Under the creeping condition, the automatic transmission control unit controls the engagement depth of the clutch based on the braking force signal and the gradient of the road on which the vehicle is located, such that the vehicle speed is maintained at the first target vehicle speed.

Optionally, under the creeping condition, the automatic transmission control unit controls the clutch engagement depth by referring to a look-up table based on the braking force signal and the gradient of the road on which the vehicle is located, such that the vehicle speed is maintained at the first target vehicle speed.

Optionally, under the creeping condition, the automatic transmission control unit calculates the clutch torque attenuation coefficient based on the braking force signal and the gradient of the road on which the vehicle is located. Then, the automatic transmission control unit acquires the target clutch engagement depth through the clutch torque attenuation coefficient and controls the clutch engagement depth based on the acquired target engagement depth, such that the vehicle speed is maintained at the first target vehicle speed.

In the embodiments of the present disclosure, the automatic transmission control unit determines the clutch transmission torque attenuation coefficient based on the braking force signal and road slope during the creeping condition, and then controls the engagement depth of the clutch. In this embodiment, various factors during vehicle operation are considered, thus providing more precise control over the clutch. It can effectively maintain vehicle speed and improve the effectiveness of speed control.

Based on the solutions according to any one or more embodiments of the present disclosure, in some embodiments, under the creeping condition, the automatic transmission control unit maps the braking force corresponding to the braking force signal to the master cylinder pressure of the brake master cylinder. The automatic transmission control unit controls the engagement depth of the clutch based on the master cylinder pressure and the gradient of the road on which the vehicle is located, such that the vehicle speed is maintained at a first target vehicle speed.

In some embodiments of the present disclosure, upon receiving the braking force corresponding to the braking force signal, the automatic transmission control unit maps the braking force to the master cylinder pressure of the brake master cylinder.

In one possible implementation, the mapped master cylinder pressure corresponding to the braking force is acquired by querying a comparison table of master cylinder pressure and braking force.

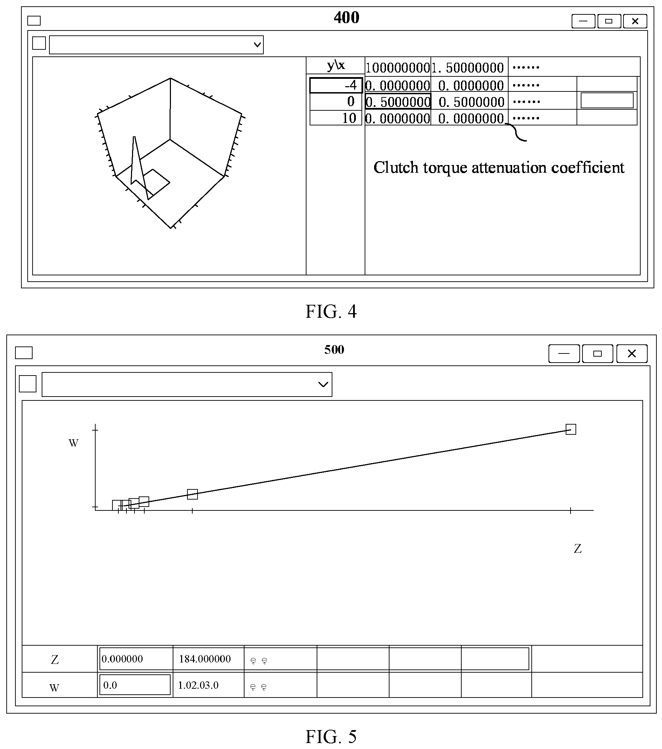

For example, FIG. 5 is a schematic diagram of a comparison table of brake pressure and four-wheel braking force according to some embodiments of the present disclosure. The comparison table 500 includes braking force Z and master cylinder pressure W, and the master cylinder pressure is acquired by referring to the table.

For example, under the creeping condition, the automatic transmission control unit controls the engagement depth of the clutch by referring to a look-up table based on the master cylinder pressure and the gradient of the road on which the vehicle is located, such that the vehicle speed is maintained at the first target vehicle speed.

Specifically, for example, referring to FIG. 5, FIG. 4 is a schematic diagram of a clutch torque transfer coefficient comparison table according to some embodiments of the present disclosure.

In the comparison table 400 shown in FIG. 4, there are displayed the master cylinder pressure X, the gradient Y of the road on which the vehicle is located, and the corresponding clutch transmission torque attenuation coefficient. Based on the master cylinder pressure, the clutch transmission torque attenuation coefficient is queried from the table. The target engagement depth of the clutch can be acquired through the clutch transmission torque attenuation coefficient, and the engagement depth of the clutch is controlled based on the acquired target engagement depth, such that the vehicle speed is maintained at the first target vehicle speed.

In another example, under the creeping condition, the automatic transmission control unit calculates the clutch torque attenuation coefficient based on the master cylinder pressure and the gradient of the road on which the vehicle is located. Then, the automatic transmission control unit acquires the target engagement depth of the clutch through the clutch torque attenuation coefficient, and controls the engagement depth of the clutch based on the acquired target engagement depth, such that the vehicle speed is maintained at the first target vehicle speed.

In the embodiments of the present disclosure, by mapping braking force to the master cylinder pressure of the brake master cylinder, the automatic transmission control unit can more accurately control the vehicle speed based on the master cylinder pressure. The magnitude of the master cylinder pressure affects the engagement depth of the clutch, which also affects the transmission of torque output by the engine to the drive wheels, thus controlling the creep speed of the vehicle and effectively ensuring the control effect on vehicle speed.

In combination with the schemes shown in any one or more embodiments of the present disclosure, in some embodiments, the above process 230b is implemented as follows. Under the starting condition, the automatic transmission control unit controls the engagement depth of the clutch based on the accelerator signal and the gradient of the road on which the vehicle is located, such that the vehicle speed is maintained at a second target vehicle speed.

Optionally, under the starting condition, the automatic transmission control unit controls the engagement depth of the clutch by referring to a look-up table based on the accelerator signal and the gradient of the road on which the vehicle is located, such that the vehicle speed is maintained at the second target vehicle speed.

For example, under the creeping condition, the automatic transmission control unit determines the clutch torque attenuation coefficient by referencing a table based on the accelerator signal and the gradient of the road on which the vehicle is located. Then the automatic transmission control unit acquires the target clutch engagement depth through the clutch torque attenuation coefficient, and controls the clutch engagement depth based on the acquired target engagement depth, such that the vehicle speed is maintained at the second target vehicle speed.

Optionally, under the starting condition, the automatic transmission control unit controls the engagement depth of the clutch by calculating based on the accelerator signal and the gradient of the road on which the vehicle is located, such that the vehicle speed is maintained at the second target vehicle speed.

For example, under the creeping condition, the automatic transmission control unit calculates the clutch torque attenuation coefficient based on the accelerator signal and the gradient of the road on which the vehicle is located. Then the automatic transmission control unit acquires the target engagement depth of the clutch via the clutch torque attenuation coefficient, and controls the clutch engagement depth based on the acquired target engagement depth, such that the vehicle speed is maintained at the second target vehicle speed.

In the embodiments of the present disclosure, the automatic transmission control unit controls the engagement depth of the clutch based on the accelerator signal and the gradient of the road during the starting condition, taking into account various factors during vehicle operation. Therefore, the control operation of the clutch is more precise, which can effectively maintain the vehicle speed and improve the effect of speed control.

For example, based on one or more of the above embodiments, embodiments of the present disclosure provide a method for controlling a vehicle speed by an automatic transmission supporting the ADAS. The embodiment pertains to the automotive field, and more specifically, to the development of software for automatic transmissions supporting the functionality and performance of ADAS. This solution addresses issues that occur when the ADAS module is activated, such as the inability of the function to complete a set scenario during cruising for a parking space, and subjectively unacceptable issues such as fluctuating vehicle speed, frequent braking, and jerking and vibration during performance optimization.

In this scheme, the automatic transmission and APA system exchange information through vehicle speed requests to control the clutch, thereby achieving stable driving of the entire vehicle and completing the process of finding a parking space.

The automatic transmission control unit communicates with the electronic stability system. The automatic transmission control unit communicates with the engine control system. The electronic stability system communicates with the engine control system. The electronic stability system communicates with the ADAS controller. The ADAS controller communicates with the external information input system.

This scheme consists of five main control systems, including: 1-automatic transmission control unit, 2-engine control system, 3-electronic stability system, 4-ADAS controller, and 5-external information input system.

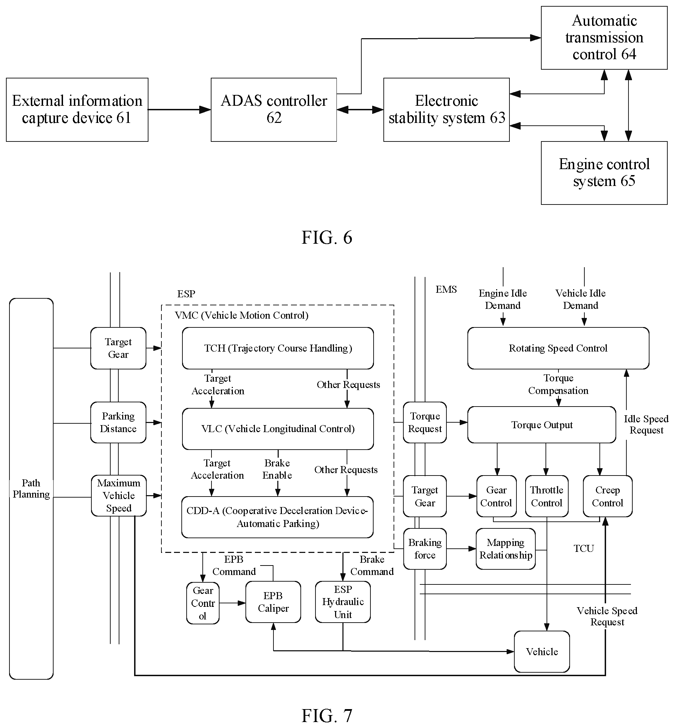

For example, FIG. 6 is a flowchart of the overall signal communication supported by the automatic transmission control unit for the ADAS system according to some embodiments of the present disclosure.

As shown in FIG. 6, the external information capture device 61 is connected to the ADAS controller 62 via CAN signals. The external information captured by the external information capture device 61 (such as from radar and cameras) is input into the ADAS controller 62. The ADAS controller 62 stores, analyzes, and calculates the received external information, and then outputs the information. The ADAS controller 62 is connected to the electronic stability system 63 and the automatic transmission 64. The electronic stability system 63 is connected to both the automatic transmission 64 and the engine control system 65. The automatic transmission control 64 is connected to the engine control system 65.

This scheme provides an implementation method for the communication interface, strategy requirements, and performance requirements of an automatic transmission control unit to fulfill the cruising for a parking space control function under the fully automatic parking function.

For example, FIG. 7 is a control framework diagram of an automatic transmission control unit according to some embodiments of the present disclosure under the APA function.

As shown in FIG. 7, the APA system is a driver assistance system that enables vehicles to automatically park or exit parking spaces in the correct manner. The system generally includes three portions, i.e., the sensor system (used to detect environmental information, cruising for a parking space, and provide real-time feedback on vehicle position information), the central control system (used to process environmental perception information, calculate target parking space parameters and vehicle relative positions online in real time, assess feasibility, and determine automatic parking strategies), and the execution system (based on the decision information from the central control system, the system controls the electronic power steering system (EPS), electronic stability program (ESP), engine management system (EMS), and transmission control unit (TCU), and controls the vehicle to move to the parking space based on the determined path).

After the APA finds and recognizes a parking space, the APA proceeds to the following two processes during fully automated parking.

In process 1, APA requests a gear position (D or R). The vehicle controls the clutch to disengage according to the requested gear position, the transmission engages the corresponding gear, and then the clutch engages, allowing the vehicle to start driving.

In process 2, upon arriving at the target position, APA requests P gear, the clutch will be disengaged, and the gearbox is shifted into P gear.

During the parking process, the APA system plans the parking path through the controller based on the surrounding information detected by radar and cameras, and the searched parking space. The lateral driving in the path is achieved by controlling the steering angle through the electronic power steering (EPS) system, while the longitudinal driving in the path is achieved by controlling acceleration, deceleration, and gear shifting through the electronic stability program (ESP) system.

Throughout the entire process, the above vehicle driving information is displayed via the instrument DVD to facilitate human-machine interaction.

As shown in FIG. 7, during the APA process of the vehicle, the TCU receives the gear shift request from the ESP. Upon implementing the gear shift, the transmission responds to the engine torque and enters the starting condition. To achieve a smooth start, the TCU receives the ESP braking force signal through the CAN line, maps the braking force to the master cylinder pressure, and then combines the brake switching signal and the accelerator signal to control the engagement and disengagement of the clutch.

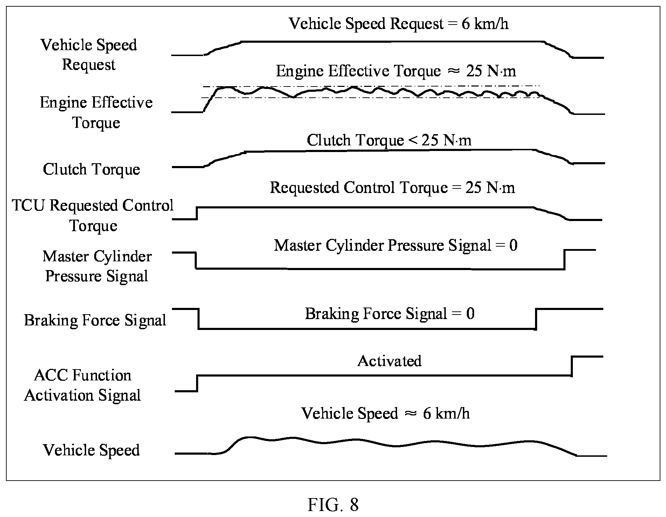

For example, FIG. 8 is a schematic diagram of the function of the automatic transmission control unit in achieving vehicle speed control under the APA function, according to some embodiments of the present disclosure.

As shown in FIG. 8, in this scheme, during the APA system cruising for a parking space, the automatic transmission can receive the CAN signal regarding the vehicle speed request sent by the APA system. Simultaneously, the automatic transmission needs to control the vehicle speed to stabilize at the speed requested by the APA system, achieving stable driving, deceleration, and parking of the entire vehicle.

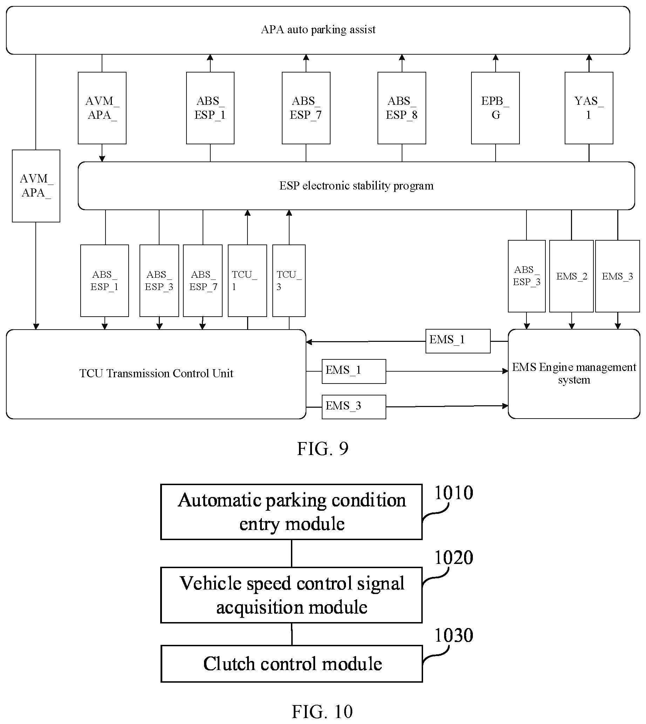

For example, FIG. 9 is a schematic diagram of an automatic transmission control unit supporting ADAS system signal communication according to some embodiments of the present disclosure.

As shown in FIG. 9, the automatic transmission control unit communicates with the APA system. The automatic transmission control unit communicates with the electronic stability system. The automatic transmission control unit communicates with the engine control system. The electronic stability system communicates with the engine control system. The electronic stability system communicates with the ADAS controller.

The above is merely one embodiment of the present disclosure and should not be construed as a limitation thereof. Those skilled in the art should appreciate that various alterations and modifications can be made to the embodiment to accommodate different application requirements. Therefore, the scope of the present disclosure should be limited by the appended claims.

FIG. 10 illustrates a block diagram of an apparatus for controlling a vehicle speed according to some embodiments of the present disclosure. The apparatus for controlling a vehicle speed can be implemented as all or part of a computer device through hardware or a combination of hardware and software, to achieve all or part of the process in the embodiments shown in FIG. 2 and FIG. 3 above. As shown in FIG. 10, the apparatus for controlling a vehicle speed includes:
an automatic parking condition entry module 1010, configured to enter the automatic parking condition in response to the torque output of the engine of the vehicle in a case where the automatic parking system is in operation;
a vehicle speed control signal acquisition module 1020, configured to acquire the vehicle speed control signal under the automatic parking condition, wherein the vehicle speed control signal includes a braking force signal or an accelerator signal, the braking force signal being sent by the electronic stability system of the vehicle controlled by the automatic parking system, and the accelerator signal being sent by the engine management system of the vehicle controlled by the automatic parking system; and
a clutch control module 1030, configured to control the clutch of the automatic transmission of the vehicle based on the vehicle speed control signal, such that the vehicle speed is maintained at the target vehicle speed corresponding to the automatic parking condition.

In some embodiments, the automatic parking condition includes a creeping condition and a starting condition.

The clutch control module 1030 is configured to maintain the vehicle in a creeping condition when the vehicle speed control signal includes a braking force signal. In the creeping condition, the clutch of the automatic transmission of the vehicle is controlled based on the braking force signal, such that the vehicle speed is maintained at a first target vehicle speed corresponding to the creeping condition. In the case where the vehicle speed control signal includes an accelerator signal, the vehicle is maintained in a starting condition; in the starting condition, the clutch of the automatic transmission of the vehicle is controlled based on the accelerator signal, such that the vehicle speed is maintained at a second target vehicle speed corresponding to the starting condition. The first target vehicle speed is less than the second target vehicle speed.

In some embodiments, under the creeping condition, the engagement depth of the clutch is controlled based on the braking force signal and the gradient of the road on which the vehicle is located, such that the vehicle speed is maintained at a first target vehicle speed.

In some embodiments, under the creeping condition, the braking force corresponding to the braking force signal is mapped to the master cylinder pressure of the brake master cylinder. Based on the master cylinder pressure and the gradient of the road on which the vehicle is located, the engagement depth of the clutch is controlled to maintain the vehicle speed at a first target vehicle speed.

In some embodiments, under the starting condition, the engagement depth of the clutch is controlled based on the accelerator signal and the gradient of the road on which the vehicle is located, such that the vehicle speed is maintained at a second target vehicle speed.

In some embodiments, the first target vehicle speed ranges from 1 to 3 kilometers per hour, and the second target vehicle speed ranges from 7 to 9 kilometers per hour.

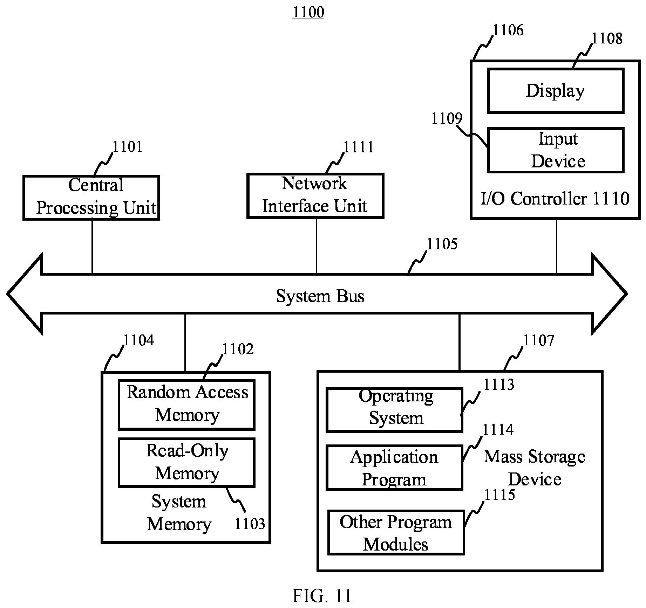

FIG. 11 is a schematic structural diagram of a computer device according to some embodiments of the present disclosure. The computer device 1100 includes a central processing unit (CPU) 1101, a system memory 1104 including a random-access memory (RAM) 1102 and a read-only memory (ROM) 1103, and a system bus 1105 connecting the system memory 1104 and the central processing unit 1101. The computer device 1100 further includes a basic input/output system (I/O system) 1106 facilitating the transmission of information between various components within the computer, and a mass storage device 1107 for storing an operating system 1113, application programs 1114, and other program modules 1115.

The basic I/O system 1106 includes a display 1108 for displaying information and input devices 1109 such as a mouse and a keyboard for user input. The display 1108 and input devices 1109 are connected to the central processing unit 1101 via an I/O controller 1110 connected to the system bus 1105. The basic I/O system 1106 further includes an I/O controller 1110 for receiving and processing inputs from multiple other devices such as a keyboard, mouse, or electronic stylus. Similarly, the I/O controller 1110 also provides outputs to a display screen, printer, or other types of output devices.

The mass storage device 1107 is connected to the central processing unit 1101 through a mass storage controller (not shown) connected to the system bus 1105. The mass storage device 1107 and its associated computer-readable media provide non-transitory storage for the computer device 1100. That is, the mass storage device 1107 includes computer-readable media (not shown) such as a hard disk or a compact disc read-only memory (CD-ROM) drive.

Without loss of generality, the computer-readable medium may include computer storage media and communication media. Computer storage media includes transitory and non-transitory, removable and non-removable media implemented in any method or technology for storage of information such as computer-readable instructions, data structures, program modules, or other data. Computer storage media includes random access memory (RAM), read-only memory (ROM), erasable programmable read-only memory (EPROM), electrically erasable programmable read-only memory (EEPROM), flash memory or other solid-state storage technologies, CD-ROM, digital video disc (DVD), or other optical storage, magnetic tape cartridges, magnetic tapes, magnetic disk storage or other magnetic storage devices. Of course, those skilled in the art will appreciate that the computer storage media are not limited to the above-mentioned types. The system memory 1104 and the mass storage device 1107 mentioned above may be collectively referred to as memory.

The computer device 1100 is connected to the Internet or other network devices through the network interface unit 1111 connected to the system bus 1105.

The memory also includes one or more programs, which are stored in the memory. The central processing unit 1101, when loading and executing the one or more programs, is caused to perform all or part of the processes in the methods shown in FIGS. 2 and 3.

In some exemplary embodiments, a chip is also provided, which includes programmable logic circuitry and/or program instructions. When the chip is operated on a computer device, the chip is caused to perform all or part of the processes of the methods according to the various embodiments of the present disclosure.

In some exemplary embodiments, a computer program product is also provided, which includes computer instructions stored in a computer-readable storage medium. The processor of a computer device, when reading and executing the computer instructions from the computer-readable storage medium, is caused to perform all or part of the processes of the method according to the various embodiments of the present disclosure.

In some exemplary embodiments, a computer-readable storage medium is also provided, in which a computer program is stored. The computer program, when loaded and executed by a processor, causes the processor to perform all or part of the processes of the methods according to the various embodiments of the present disclosure.

Those skilled in the art can understand that all or part of the processes for implementing the above embodiments can be accomplished through hardware, or through programs instructing the relevant hardware to complete. The above programs can be stored in a computer-readable storage medium, which can be a read-only memory, magnetic disk, optical disk, or the like.

A person skilled in the art should be aware that in the foregoing one or more examples, the functions described in the embodiments of the present disclosure may be implemented by hardware, software, firmware, or any combination thereof. The functions, when implemented by software, may be stored in a computer-readable medium or transmitted as at least one instruction or code on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are merely optional embodiments of the present disclosure and are not intended to limit the present disclosure. Any modifications, equivalent substitutions, improvements, or the like, made within the spirit and principle of the present disclosure should fall within the protection scope of the present disclosure.

## Claims

1. A method for controlling a vehicle speed, implemented by a vehicle equipped with an automatic parking system, and the method comprising:
in a case where the automatic parking system is in operation, entering, by an automatic transmission control unit of the vehicle, an automatic parking condition in response to a torque output of an engine of the vehicle;
under the automatic parking condition, acquiring, by the automatic transmission control unit, a vehicle speed control signal, wherein the vehicle speed control signal comprises a braking force signal or an accelerator signal, the braking force signal being sent by an electronic stability system of the vehicle controlled by the automatic parking system, and the accelerator signal being sent by an engine management system of the vehicle controlled by the automatic parking system; and
controlling, by the automatic transmission control unit, a clutch of an automatic transmission of the vehicle based on the vehicle speed control signal, such that the vehicle speed is maintained at a target vehicle speed corresponding to the automatic parking condition.

2. The method according to claim 1, wherein the automatic parking condition comprises a creeping condition and a starting condition; and
controlling, by the automatic transmission control unit, the clutch of the automatic transmission of the vehicle based on the vehicle speed control signal, such that the vehicle speed is maintained at the target vehicle speed corresponding to the automatic parking condition comprises:
in a case where the vehicle speed control signal comprises the braking force signal, maintaining, by the automatic transmission control unit, the creeping condition, and under the creeping condition, controlling, by the automatic transmission control unit, the clutch of the automatic transmission of the vehicle based on the braking force signal, such that the vehicle speed is maintained at a first target vehicle speed corresponding to the creeping condition; and
in a case where the vehicle speed control signal comprises the accelerator signal, maintaining, by the automatic transmission control unit, the starting condition, and under the starting condition, controlling, by the automatic transmission control unit, the clutch of the automatic transmission of the vehicle based on the accelerator signal, such that the vehicle speed is maintained at a second target vehicle speed corresponding to the starting condition;
wherein the first target vehicle speed is lower than the second target vehicle speed.

3. The method according to claim 2, wherein under the creeping condition, controlling, by the automatic transmission control unit, the clutch of the automatic transmission of the vehicle based on the braking force signal, such that the vehicle speed is maintained at the first target vehicle speed corresponding to the creeping condition comprises:
under the creeping condition, controlling, by the automatic transmission control unit, an engagement depth of the clutch based on the braking force signal and a gradient of a road on which the vehicle is located, such that the vehicle speed is maintained at the first target vehicle speed.

4. The method according to claim 3, wherein under the creeping condition, controlling, by the automatic transmission control unit, the engagement depth of the clutch based on the braking force signal and the gradient of the road on which the vehicle is located, such that the vehicle speed is maintained at the first target vehicle speed comprises:
under the creeping condition, mapping, by the automatic transmission control unit, a braking force corresponding to the braking force signal to a master cylinder pressure of a master braking cylinder, and based on the master cylinder pressure and the gradient of the road on which the vehicle is located, controlling, by the automatic transmission control unit, the engagement depth of the clutch, such that the vehicle speed is maintained at the first target vehicle speed.

5. The method according to claim 2, wherein under the starting condition, controlling, by the automatic transmission control unit, the clutch of the automatic transmission of the vehicle based on the accelerator signal, such that the vehicle speed is maintained at the second target vehicle speed corresponding to the starting condition comprises:
under the starting condition, controlling, by the automatic transmission control unit, an engagement depth of the clutch based on the accelerator signal and a gradient of a road on which the vehicle is located, such that the vehicle speed is maintained at the second target vehicle speed.

6. The method according to any one of claims 2 to 5, wherein
the first target vehicle speed ranges from 1 to 3 kilometers per hour; and
the second target vehicle speed ranges from 7 to 9 kilometers per hour.

7. An apparatus for controlling a vehicle speed, comprising:
an automatic parking condition entry module, configured to enter an automatic parking condition in response to a torque output of an engine of the vehicle in a case where an automatic parking system is in operation;
a vehicle speed control signal acquisition module, configured to acquire a vehicle speed control signal of the vehicle under the automatic parking condition, wherein the vehicle speed control signal comprises a braking force signal or an accelerator signal, the braking force signal being sent by an electronic stability system of the vehicle controlled by the automatic parking system, and the accelerator signal being sent by an engine management system of the vehicle controlled by the automatic parking system; and
a clutch control module, configured to control a clutch of an automatic transmission of the vehicle based on the vehicle speed control signal, such that the vehicle speed is maintained at a target vehicle speed corresponding to the automatic parking condition.

8. A computer device, comprising a processor and a memory, wherein the memory stores one or more computer instructions, and the one or more computer instructions, when loaded and executed by the processor, cause the processor to perform the method as defined in any one of claims 1 to 6.

9. A computer-readable storage medium, storing one or more computer instructions, wherein the one or more computer instructions, when loaded and executed by a processor, cause the processor to perform the method as defined in any one of claims 1 to 6.

10. A computer program product, comprising one or more computer instructions stored in a computer-readable storage medium, wherein the one or more computer instructions, when loaded and executed by a processor of a computer device, cause the processor to perform the method as defined in any one of claims 1 to 6.
